# EUROPÄISCHE PATENTSCHRIFT

(11) **EP 0 857 118 B1**
(45) Veröffentlichungstag und Bekanntmachung des Hinweises auf die Patenterteilung: **17.11.1999**
(21) Anmeldenummer: 96934571.9
(22) Anmeldetag: 08.10.1996
(51) Int. Cl.: B60K 37/00, B62D 1/18

(54) **KRAFTFAHRZEUG MIT EINEM LAGEVERÄNDERLICH ANGEORDNETEN LENKRAD UND EINER LAGEVERÄNDERLICH ANGEORDNETEN ARMATURENTAFEL**
MOTOR VEHICLE WITH A POSITION-ADJUSTABLE STEERING WHEEL AND A POSITION-ADJUSTABLE DASHBOARD
VEHICULE AVEC VOLANT DE DIRECTION A POSITION REGLABLE ET TABLEAU DE BORD A POSITION REGLABLE

(30) Priorität: 12.10.1995 DE 19537931
(43) Veröffentlichungstag der Anmeldung: 12.08.1998
(73) Patentinhaber: Mannesmann VDO AG, 60326 Frankfurt (DE)
(72) Erfinder: SKABROND, Klaus, D-78052 Villingen-Schwenningen (DE); BARTHOLOMÄI, Gunther, D-78052 Villingen-Schwenningen (DE)
(86) Internationale Anmeldenummer: EP9604357
(87) Internationale Veröffentlichungsnummer: WO9713652

(56) Entgegenhaltungen:
- EP-A- 0 199 106
- WO-A-84/00524
- GB-A- 2 113 164
- PATENT ABSTRACTS OF JAPAN vol. 012, no. 432 (M-763), 15.November 1988 & JP 63 166628 A (TOYODA GOSEI CO LTD), 9.Juli 1988,
- PATENT ABSTRACTS OF JAPAN vol. 012, no. 432 (M-763), 15.November 1988 & JP 63 166627 A (TOYODA GOSEI CO LTD), 9.Juli 1988,

## Beschreibung

Die Erfindung betrifft ein Kraftfahrzeug mit einem lageveränderlich angeordneten Lenkrad und einer lageveränderlich angeordneten Armaturentafel.

Studien für eine Neukonzeption der Fahrerarbeitsplätze von Omnibussen insbesondere von Linienbussen zeigen, wie beispielsweise aus dem Sonderdruck aus der ATZ 96 (1994), Heft 7/8, Seiten 412-414 hervorgeht, daß aus arbeitsmedizinischer und ergonomischer Sicht die Bauform und die Verstellmöglichkeiten des Fahrersitzes allein nicht ausreichen, um eine optimale Körperhaltung beim Führen des Fahrzeuges zu erzielen. Vielmehr ist es, damit eine Vielzahl von Fahrerinnen und Fahrern in der Lage ist, eine gesunde und komfortable Arbeitshaltung einnehmen zu können, zusätzlich erforderlich, Möglichkeiten für ein axiales Verstellen und für ein Verschwenken des Lenkrades vorzusehen und außerdem auch die Voraussetzungen für eine Lageänderung der Armaturentafel zu schaffen. Dabei besteht ein direkter Zusammenhang zwischen dem Winkel des Lenkrades zur Horizontalen und dem Winkel der Anzeigeebene der Armaturentafel zur Horizontalen. Mit anderen Worten, aus der Lage der Augenpunkte ergibt sich für einen relativ großen Fahrer eine angehobene, weniger geneigte Lenkradposition sowie eine in gleicher Weise flach geneigte Instrumentenebene der Armaturentafel, für einen relativ kleinen Fahrer oder eine Fahrerin eine abgesenkte, stärker geneigte Lenkradposition sowie eine in gleicher Weise steiler stehende Instrumentenebene der Armaturentafel. Bei der Umsetzung dieser arbeitsmedizinisch-ergonomischen Empfehlungen stellen sich verständlicher Weise erhebliche technische Probleme ein, insbesondere was die Arretierung und Verstellbarkeit der eine relativ große und weit ausladende Masse darstellende Armaturentafel sowie deren Stabilisierung, das heißt, schwingungssichere Aufhängung anbelangt. Dabei ist bezüglich der Verstellbarkeit zu fordern, daß die erforderlichen Kräfte relativ gering sind, zumal, insbesondere bei Omnibussen, die Fahrer häufig wechseln und dabei auch Frauen als Fahrer tätig sein können. Erschwerend kommt hinzu, daß die anzustrebende ergonomisch-technische Optimierung in einem Technikbereich erfolgen soll, der bei möglichst niedrigen Kosten sowohl Serienfertigungsfähigkeit und somit gute Reproduzierbarkeit als auch eine aufwandminimierte Montierbarkeit voraussetzt.

Aufgabe der vorliegenden Erfindung war es daher in einem Kraftfahrzeug sowohl die Lenksäule als auch die Armaturentafel so anzuordnen, daß eine Lageänderung von Lenkrad und Armaturentafel leicht vorgenommen werden kann, Eigenschwingungen gegenüber der Fahrerkabine vermieden sind und der Aufwand für die Montage einer derartigen Anordnung in einem Kraftfahrzeug weitgehend reduziert ist.

Die Lösung der gestellten Aufgabe beschreibt der Patentanspruch 1. Vorteilhafte Ausführungseinzelheiten gehen aus den Unteransprüchen hervor.

Bei der gefundenen Lösung ist bemerkenswert, daß die Lenksäule und die Armaturentafel nicht relativ zueinander bewegbar sind sondern eine heb- und senkbare sowie schwenkbare Baueinheit bilden, die mittels geeigneter parallelliegender Kulissenführungen verschiebbar und in jeder Position arretierbar ist. Das Lenkrad dient als Handgriff für das ergonomische günstige Einrichten dieser Baueinheit auf den jeweiligen Fahrer oder die jeweilige Fahrerin. Der entscheidende Vorteil ist insbesondere darin zu sehen, daß die Baueinheit sozusagen über eine 3-Punkt-Auflage an dem frontseitigen Querholm der Fahrerkabine des betreffenden Fahrzeuges unter Verwendung einer auf einfache Weise befestigbaren, das heißt vor dem Festschrauben am Querholm aufhängbaren Konsole angeordnet wird, was zur Folge hat, daß die Baueinheit lediglich die Schwingungen der Fahrerkabine mitvollzieht. Dabei ist die Baueinheit als Funktionseinheit außerhalb des Fahrzeuges justierbar und fertig justiert in das Fahrzeug einsetzbar.

Von besonderer Bedeutung für die gefundenen Lösung ist die Stabilisiervorrichtung, die in der relativ breiten Abstützung der Armaturentafel durch in geeigneter Weise angebrachte Führungsschienen und in den Maßnahmen zur Vermeidung des Verkantens der aus Lenksäule und Armaturentafel gebildeten Baueinheit bei deren Lageveränderung besteht. Diese Maßnahmen sehen bei jeweils jeder der Armaturentafel zugeordneten Führungsschiene eine mit einer Zahnrad/Zahnstangenverbindung kombinierte Kulissenführung vor, welche ein gleichmäßiges Verteilen der beim Heben und Senken sowie bei Verschwenken der Lenksäule/Armaturentafel-Baueinheit auftretenden Kräfte bewirkt. Hinzu kommt, daß zwischen der Armaturentafel und einer beide Zahnräder tragende Verbindungsstange eine gelenkige Verbindung vorgesehen ist.

Die gefundene Lösung gestattet es ferner, für das Verschwenken der Baueinheit im Zahnrad/Zahnstangeneingriff und zwischen den in den Führungsschienen vorgesehenen Kulissen und der in beide Kulissen eingreifenden Verbindungsstange der Stabilisiervorrichtung das geringstmögliche Spiel vorzusehen. Gemeint ist damit die räumliche Zuordnung der an der Armaturentafel befestigten Funktionselemente der Stabilisiervorrichtung und der Drehachse der Lenksäule derart, daß die Ebene, in der die Verbindungsstange und die Drehachse der Lenksäule liegen, in einer mittleren Position des Schwenkwinkels der Lenksäule/Armaturentafel-Baueinheit im wesentlichen rechtwinklig zu einer Ebene steht, in welcher sich die beiden Kulissen der Stabilisiervorrichtung befinden.

Außerdem sind die fertigungs-, insbesondere aber montagetechnisch relativ einfachen Mittel hervorzuheben, die eine Arretierung der Stabilisiervorrichtung bewirken. Es handelt sich dabei um ein auf der Verbindungsstange lose aufgenommenes, federbelastetes Spannelement, welches pneumatisch lösbar ist. Der Kraftfluß dieser kraftschlüssigen Arretierung erfolgt ausgehend von dem Spannelement über auf der Verbindungsstange aufgenommene, mit Mitteln zum Spielausgleich versehene Spannhülsen in Richtung der Führungsschienen und somit in Richtung der außenliegenden Zahnräder der Stabilisiervorrichtung. Letztere sind mittels Gewindebuchsen mit der Verbindungsstange verschraubt und in geeigneter Weise gekontert. Das heißt, der Kraftfluß ist über die auf Zug belastete Verbindungsstange geschlossen.

Der Vollständigkeit sei noch erwähnt, daß trotz des erheblichen Gewichtes der Lenksäule/Armaturentafel-Baueinheit eine Abstimmung derart vorgenommen werden kann, daß ein Heben wenig Kraftaufwand bedarf, gegebenenfalls auch selbsttätig erfolgt. Dabei wirken einerseits die gegenüber der Wirkungsrichtung der Schwerkraft schief verlaufenden Kulissenführungen andererseits eine in der von der Lenksäule ausgehenden Gelenkwelle eingefügte vorzugsweise mit einer Gasfeder versehene Teleskopwelle zusammen.

Im folgenden sei die Erfindung anhand eines in den Zeichnungen dargestellten Ausführungsbeispiels näher erläutert. Es zeigen
FIGUR 1 eine Übersichtsdarstellung der erfindungsgemäßen Lenksäule/Armaturenbrett-Baueinheit in einer Seitenansicht,
FIGUR 2 eine Seitenansicht von Konsole und Stabilisiervorrichtung in Zuordnung zu einem fahrzeugfesten Rahmen,
FIGUR 3 eine Ansicht von Konsole und Stabilisiervorrichtung in Peilrichtung A in Figur 2 ohne Darstellung des fahrzeugfesten Rahmens,
FIGUR 4 einen Teilschnitt der Stabilisiervorrichtung gemäß der Schnittlinie B in Figur 2,
FIGUR 5 eine schematische Darstellung der getrieblichen Beziehungen der Lenksäule/Armaturenbrett-Baueinheit zur Fahrerkabine.

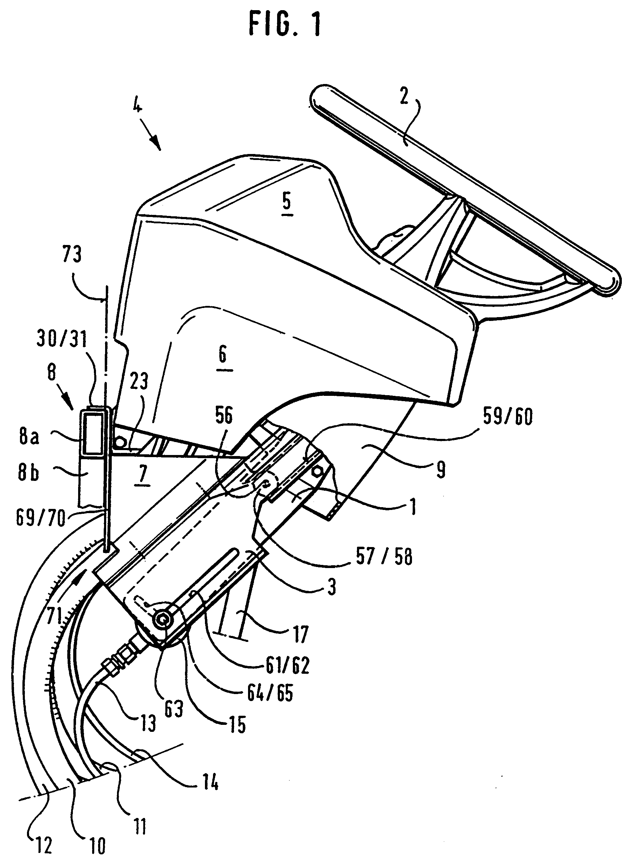

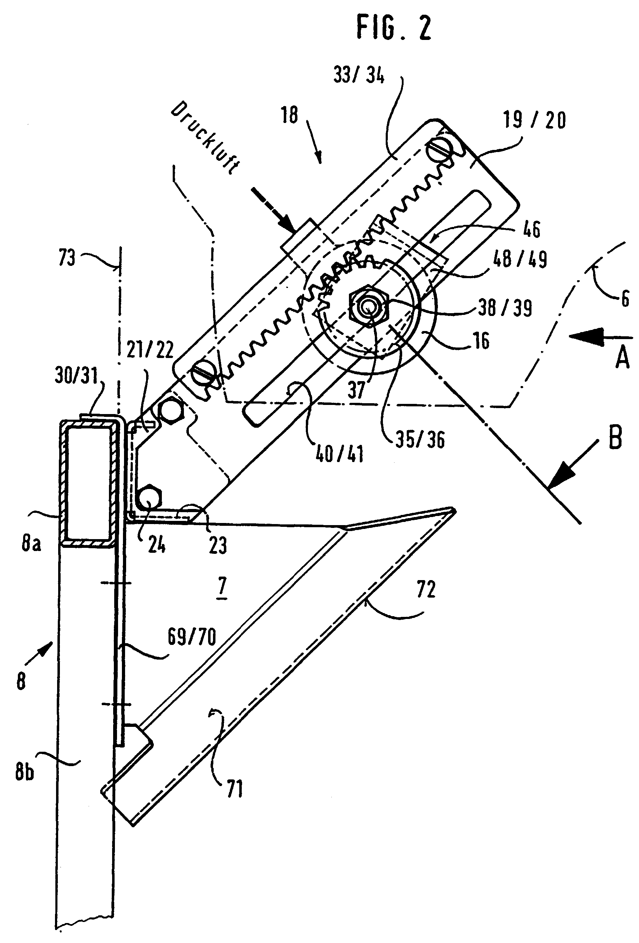

Wie aus der Übersichtsdarstellung Figur 1, hervorgeht sind eine Lenksäule 1, in welcher die nichtdargestellte Welle eines Lenkrades 2 gelagert ist, bzw. ein der Lenksäule 1 zugeordneter Halterahmen 3 und eine Armaturentafel 4, deren die Anzeige- und Registrierinstrumente, Schalter und andere Steuerelemente aufnehmender Körper aus zwei Schalen 5, 6 zusammengefügt ist, einer Konsole 7 zugeordnet, welche sich an einem frontseitigen Rahmen 8 der Fahrerkabine des betreffenden Fahrzeuges abstützt und in nicht näher bezeichneter Weise befestigt ist. Der genannte Rahmen 8 wird in diesem Falle gebildet von einem Querholm 8a der Fahrerkabine und von vorzugsweise zwei an dem Querholm 8a angeschweißten und zum Boden der Fahrerkabine reichenden Stützen oder freistehenden Trägern 8b. Mit 9 ist eine Verkleidung der Lenksäule 1 bezeichnet, bei 10 und 11 handelt es sich um der Armaturentafel 4 zugeführte Lüftungsschläuche und 12 bezeichnet einen Schutzschlauch für die elektrischen Verbindungen der Armaturentafel 4. Zwei Leitungen 13 und 14 stellen Druckluftleitungen dar. Sie sind jeweils mit einem Spannelement 15 bzw. 16 (Figur 2) verbunden, welche der Arretierung der Lenksäule/Armaturentafel-Baueinheit dienen. Mit 17 ist ein Element einer zum Lenkgetriebe führenden und mit der Welle des Lenkrades verbundenen Gelenkwelle bezeichnet. Vorzugsweise ist dieses Element der Gelenkwelle als eine mit einer Gasfeder versehene Teleskopwelle ausgebildet.

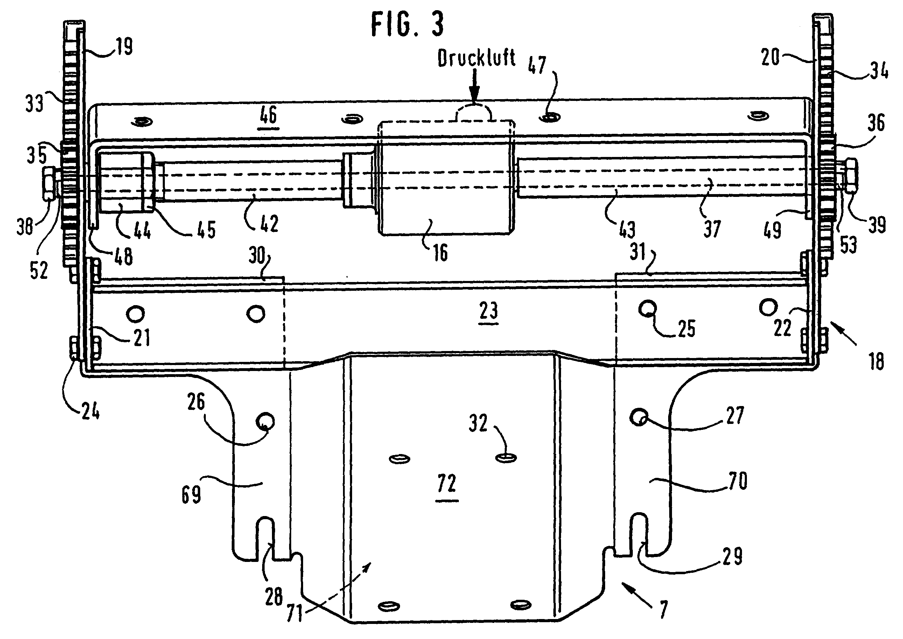

Die Figuren 2 und 3 zeigen eine der Armaturentafel 4 zugeordnete Stabilisiervorrichtung 18, welche Führungsschienen 19 und 20 aufweist, die an den Wangen 21 und 22 eines sich auf der Konsole 7 abstützenden Querträgers 23 befestigt sind. Eine der hierfür vorgesehenen Schraubverbindungen ist mit 24 bezeichnet. Der als u-Profil ausgebildete Querträger 23 stellt bezüglich der Konsole 7 eine zusätzliche Versteifung dar. Durchgangsbohrungen, von denen eine mit 25 bezeichnet ist, weitere Bohrungen 26 und 27 und Schlitze 28 und 29 sind für die Befestigung der Konsole 7 an dem Rahmen 8 vorgesehen. Zur Entlastung der Schraubverbindungen der Konsole 7 aber auch zur Montageerleichterung, nämlich Aufhängen der Lenksäule/Armaturentafel-Baueinheit an dem Querholm 8a vor dem Festschrauhen, dienen an der Konsole 7 angeformte Leisten 30 und 31. Mit 32 ist eine von vier in der Konsole 7 angebrachten Durchgangsbohrungen bezeichnet, die für Schraubverbindungen zwischen der Konsole 7 und dem Halterahmen 3 der Lenksäule 1 vorgesehen sind.

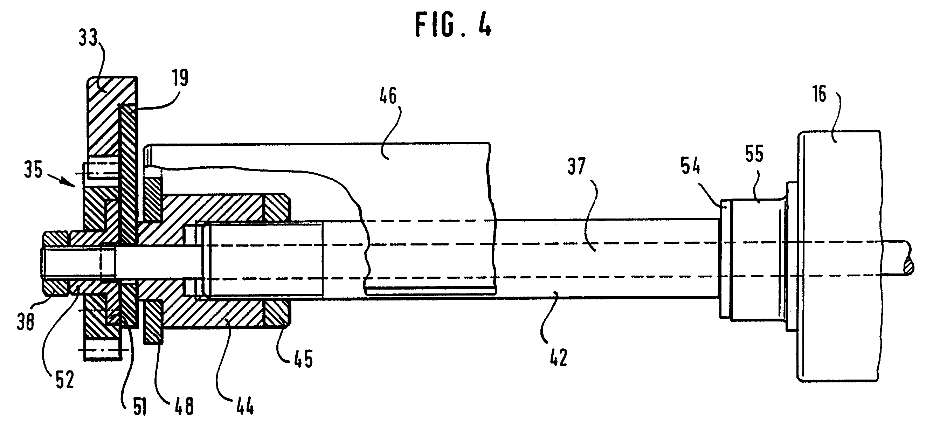

Wie ferner aus den Figuren 2 und 3 ersichtlich ist, sind an den Führungsschienen 19 und 20 mittels nicht näher bezeichneter Schraubverbindungen Zahnstangen 33 und 34 befestigt, und zwar derart, daß sich die jeweiligen Verzahnungen an der Außenseite der Führungsschienen 19 und 20 befinden. Mit den Zahnstangen 33 und 34 stehen Zahnräder 35 und 36 in Eingriff, die auf einer Verbindungsstange 37 mittels Muttern 38 und 39 befestigt sind. Das heißt, die Verbindungsstange 37 greift durch beide Führungsschienen 19 und 20 hindurch und dabei in Kulissen 40 und 41 ein, die in den Führungsschienen 19 und 20 ausgebildet sind. Insbesondere aus der Figur 3 geht hervor, daß dem auf der Verbindungsstange 37 lose aufgesetzten Spannelement 16 Spannhülsen 42 und 43 zugeordnet sind, die ebenfalls lose auf der Verbindungsstange 37 aufgesteckt sind. Eine der Spannhülsen 42, ist mit einem nicht mit einem Bezugszeichen versehenen Gewinde zur Aufnahme von dem Spielausgleich dienenden und gegeneinander konterbaren Muttern 44 und 45 ausgestattet. Mit 46 ist ein als Lagerbrücke ausgebildeter Träger bezeichnet, welcher mit der einen Schale 6 der Armaturentafel 4 fest verbunden ist. Eine der Durchgangsöffnungen für die diesbezüglichen Schraubverbindungen ist mit 47 bezeichnet. Wie insbesondere aus dem Figur 3 ersichtlich ist, sind die Schenkel 48 und 49 des Trägers 46 auf den Spannhülsen 42 und 43 drehbeweglich gelagert, das heißt, daß die Armaturentafel 4 gelenkig mit der Verbindungsstange 37 und den auf dieser angeordneten Funktionselementen verbunden ist. Die Figur 4 zeigt, daß der eine Schenkel 48 des Trägers 46 nicht unmittelbar auf der Spannhülse 42, sondern auf einem an der Mutter 44 angeformten Bund 50 gelagert ist. Ferner zeigt die Figur 4, daß das Zahnrad 35, mit einer Gewindebuchse 51 versehen ist, an deren Ansatz 52 nicht näher bezeichnete Flächen für das Ansetzen eines Werkzeuges angeformt sind. Gleiches gilt auch für das Zahnrad 36. In Figur 3 ist der Ansatz der dem Zahnrad 36 zugeordneten Gewindebuchse sichtbar und mit 53 bezeichnet. Eine mit 54 bezeichnete Scheibe dient dem Durchmesserausgleich zwischen der Spannhülse 42 und einem Druckstück 55 des Spannelementes 16.

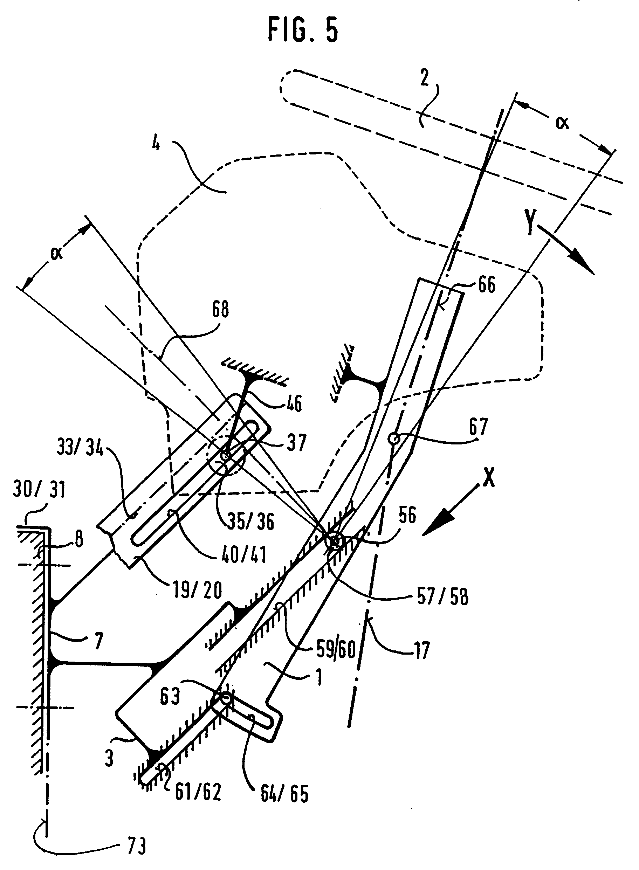

Mit der schematischen Darstellung, Figur 5, wird verdeutlicht, daß die Lenksäulen/Armaturentafel-Baueinheit in mehreren parallelen Kulissenführungen geführt ist und sowohl in Richtung des Pfeiles X gehoben und gesenkt als auch in Richtung des Pfeiles Y in Jeder Stellung in Richtung X bis zu einem Winkel α verschwenkt werden kann. Ferner ist ersichtlich, daß die Armaturentafel 4 einerseits mit der Lenksäule 1 fest verbunden andererseits mittels der Funktionselemente 35 und 36, 37, 38 und 39 und 46 mit den konsolenfesten Führungsschienen 19 und 20 der Stabilisiervorrichtung 18 getrieblich verbunden ist.

Das Verschwenken der Baueinheit erfolgt um eine lenksäulenfeste Drehachse 56, auf welcher bederseits der beispielsweise als u-profilierter Körper ausgebildete Lenksäule 1 als Laufrollen 57 und 58 dienende Kugellager befestigt sind. Die Laufrollen 57 und 58 greifen ihrerseits in im Halterahmen 3 als Nute 59 und 60 ausgebildete Kulissen ein. Eine zweite Führung findet die Lenksäule 1 in ebenfalls im Halterahmen 3 angebrachten, als Schlitze 61 und 62 ausgebildeten Kulissen, die unter Verwendung einer in beide Schlitze 61 und 62 eingreifende, der Lenksäule zugeordneten Achse 63 den Hub der Lenksäule 1 begrenzen. Die Achse 63 dient ihrerseits wiederum als Anschlag für die Schwenebewegung der Lenksäule 1 indem die Achse 63 durch geeignete in den Seitenwänden der Lenksäule 1 vorgesehene Langlöcher 64 und 65 durchgreift. Wie aus der Figur 1 ersichtlich ist, ist auf der Achse 63 das Spannelement 15 angeordnet, das der kraftschlüssigen Verbindung von Halterahmen 3 und die Lenksäule 1 und somit der Arretierung der Lenksäule 1 in einer bestimmten Hub/Schwenkposition dient.

Mit 66 ist in Figur 5 die mit dem Lenkrad 2 fest verbundene und in der Lenksäule 1 drehbar gelagerte Welle bezeichnet; 67 stellt ein zwischen der Welle 66 und der die Lenksäule/Armaturentafel-Baueinheit beim Lösen der Spannelemente 15 und 16 stützende Teleskopwelle 17 vorgesehenes Kreuzgelenk dar. Außerdem macht die Figur 5 deutlich, daß der radiale Hub der Verbindungsstange 37 und somit der Zahnräder 35 und 36 beim Verschwenken der Baueinheit am geringsten ist, wenn die der Armaturentafel 4 zugeordneten Funktionselemente derart angeordnet werden, daß in der Mittenposition 68 des Schwenkwinkels α die Ebene, in der sowohl die Verbindungsstange 37 als auch die Drehachse 56 liegen zur Ebene, in der sich die Kulissen 40 und 41 befinden rechtwinklig steht.

Ferner sei noch erwähnt, daß die Konsole 7 zwischen dem Querträger 23 und den diesem rechtwinklig zugeordneten Stützarmen 69, 70 derart ausgeformt ist, daß sie, wie aus den Figuren 2 und 3 ersichtlich ist, für die Lüftungsschläuche 10, 11 den Schutzschlauch 12 für die elektrischen Leitungen und die Druckluftleitung 14 einen vorzugsweise zwischen die Träger 8b des Rahmens 8 eingreifenden Führungskanal 71 bildet, dessen Boden 72 die Flanschflächen für den Halterahmen 3 der Lenksäule 1 darstellt. Da ein Scheuern der Leitungen und Schläuche an den Kanten des Führungskanals 71 und an den Verschraubungen des Halterahmens 3 beim Verstellen der Lenksäule/Armaturentafel-Baueinheit vermieden werden muß, ist es neben geeigneten Kentenrundungen zweckmäßig, eine Kunststoffauskleidung wenigstens jedoch eine im Grunde des Führungskanals 71 befestigte Kunststoffsohle vorzusehen. Das Bezugszeichen 73 bezeichnet die Befestigungsebene der Konsole 7.

## Patentansprüche

1. Kraftfahrzeug mit einem lageveränderlich angeordneten Lenkrad und einer lageveränderlich angeordneten Armaturentafel
**dadurch gekennzeichnet,**
daß die Armaturentafel (4) und die das Lenkrad (2) tragende, axial verstellbar und schwenkbar gelagerte Lenksäule (1) miteinander fest verbunden sind und
daß eine mit dem frontseitigen Querholm (8a) der Fahrerkabine verbindbare Konsole (7) vorgesehen ist, an welcher ein die Lenksäule (1) tragender, mit Kulissenführungen (59/60, 61/62) für die Lenksäule (1) versehener Halterahmen (3) befestigt ist und mit welcher eine der Armaturentafel (4) zugeordnete Stabilisiervorrichtung (18) verbunden ist, welche zwei in relativ großem Abstand voneinander angeordnete Führungsschienen (19, 20) und mit den Führungsschienen (19, 20) in Wirkverbindung stehende, mit der Armaturentafel (4) verbundene Funktionselemente (35/36, 37, 38/39, 46) aufweist derart, daß die Stabilisiervorrichtung (18) sowohl eine Höhenverstellung als auch ein Verschwenken der Lenksäule/Armaturentafel-Baueinheit um eine im Halterahmen (3) verschiebbar gelagerte Drehachse (56) gestattet.

2. Kraftfahrzeug nach Anspruch 1,
**dadurch gekennzeichnet,**
daß die Konsole (7) einem im wesentlichen in der Befestigungsebene (73) liegenden Querträger (23) und diesem rechtwinklig zugeordnete Stützarme (69, 70) aufweist,
daß an dem Querträger (23) der Befestigung der Führungsschienen (19/20) dienende Wangen (21/22) angeformt sind,
daß an der Konsole (7) auf der den Wangen (19/20) abgewandten Seite wenigstens eine Leiste (30/31) für das Aufhängen der Konsole (7) an dem Querholm (8a) des Fahrzeuges ausgebildet sind und
daß zwischen den Stützarmen (69/70) ein Führungskanal (71) derart angeformt ist, daß der Boden (72) des Führungskanals (71) in einem spitzen Winkel zur Befestigungsebene (73) ausgebildet ist.

3. Kraftfahrzeug nach Anspruch 1,
**dadurch gekennzeichnet,**
daß die Stabilisiervorrichtung (18) eine durch Kulissen (40/41) in den Führungsschienen (19/20) durchgreifende Verbindungsstange (37) aufweist,
daß auf der Verbindungsstange (37) außerhalb der Führungsschienen (19/20) Zahnräder (35/36) befestigt sind,
daß mit den Führungsschienen (19/20) Zahnstangen (33/34) verbunden sind, in welche die Zahnräder (35/36) eingreifen und daß
die Verbindungsstange (37) mittelbar mit der Armaturentafel (4) verbunden ist derart, daß in der Mittenposition (68) des Schwenkwinkels α der Lenksäule/Armaturenbrett-Baueinheit die Ebene, in welcher sowohl die Verbindungsstange (37) als auch die Drehachse (56) liegen senkrecht steht zu der Ebene, in welcher sich die Kulissen (40/41) befinden.

4. Kraftfahrzeug nach Anspruch 1,
**dadurch gekennzeichnet,**
daß ein Element der zwischen dem Lenkrad (2) und dem Lenkgetriebe des Kraftfahrzeuges vorgesehenen und aus mehreren gelenkig miteinander verbundenen Elementen bestehenden Lenkwelle als gefederte Teleskopwelle (17) ausgebildet ist.

5. Kraftfahrzeug nach Anspruch 1,
**dadurch gekennzeichnet,**
daß zwischen den Führungsschienen (19/20) ein auf der Verbindungsstange (37) lose gelagertes Spannelement (16) vorgesehen ist,
daß dem Spannelement (16) konzentrisch zur Verbindungsstange (37) angeordnete Spannhülsen (42/43) zugeordnet sind und daß als Verbindung zwischen der Armaturentafel (4) und den der Armaturentafel (4) zugeordneten Funktionselementen (35/36, 37, 38/39) der Stabilisiervorrichtung (18) ein an der Armaturentafel (4) befestigter, als Lagerbrücke ausgebildeter Träger (46) vorgesehen ist, welcher auf den Spannhülsen (42/43) gelagert ist.

## Claims

1. Motor vehicle with a position-adjustably arranged steering wheel and a position-adjustably arranged instrument panel,
**characterized**
in that the instrument panel (4) and the steering column (1), which carries the steering wheel (2) and is axially adjustably and pivotably mounted, are fixedly interconnected and
in that a bracket (7) connectable to the front crossmember (8a) of the driver's cab is provided, to which bracket a holding frame (3), which carries the steering column (1) and is provided with connecting-link guides (59/60, 61/62) for the steering column (1), is fastened and a stabilizing device (18), assigned to the instrument panel (4), is connected, which stabilizing devise has two guide rails (19, 20) arranged at a relatively large distance from one another and functional elements (35/36, 37, 38/39, 46) in operative connection with the guide rails (19, 20) and connected to the instrument panel (4), such that the stabilizing devise (18) permits both a height adjustment and a pivoting of the steering column/instrument panel constructional unit about a fulcrum pin (56) displaceably mounted in the holding frame (3).

2. Motor vehicle according to Claim 1,
**characterized**
in that the bracket (7) has a crossbeam (23) lying substantially in the fastening plane (73) and supporting arms (69, 70) assigned to the crossbeam at right angles,
in that cheeks (21/22), which serve for the fastening of the guide rails (19/20), are integrally formed on the crossbeam (23),
in that at least one strip (30/31) for the suspension of the bracket (7) from the crossmember (8a) of the vehicle is constructed on the bracket (7), on the side facing away from the cheeks (19/20 [sic]), and
in that a guide channel (71) is integrally formed between the supporting arms (69/70) such that the bottom (72) of the guide channel (71) is constructed at an acute angle to the fastening plane (73).

3. Motor vehicle according to Claim 1,
**characterized**
in that the stabilizing device (18) has a connecting rod (37) passing through connecting links (40/41) in the guide rails (19/20),
in that toothed wheels (35/36) are fastened on the connecting rod (37) outside the guide rails (19/20), in that toothed racks (33/34), in which the toothed wheels (35/36) engage, are connected to the guide rails (19/20) and in that the connecting rod (37) is indirectly connected to the instrument panel (4) such that, in the centre position (68) of the pivot angle α of the steering column/instrument panel constructional unit, the plane in which both the connecting rod (37) and the fulcrum pin (56) lie is situated perpendicularly to the plane in which the connecting links (40/41) are located.

4. Motor vehicle according to Claim 1,
**characterized**
in that an element of the steering shaft, which is provided between the steering wheel (2) and the steering gear of the motor vehicle and comprises a plurality of elements interconnected in articulated fashion, is constructed as a sprung telescopic shaft (17).

5. Motor vehicle according to Claim 1,
**characterized**
in that a clamping element (16) loosely mounted on the connecting rod (37) is provided between the guide rails (19/20),
in that clamping sleeves (42/43) arranged concentrically with the connecting rod (37) are assigned to the clamping element (16) and
in that a support (46), which is fastened to the instrument panel (4), constructed as a bearing bridge and mounted on the clamping sleeves (42/43), is provided as connection between the instrument panel (4) and the functional elements (35/36, 37, 38/39) of the stabilizing device (18) which are assigned to the instrument panel (4).

## Revendications

1. Véhicule automobile avec un volant à position variable et un tableau de bord à position variable,
caractérisé par le fait
que le tableau de bord (4) et la colonne de direction (1) portant le volant (2), montée de manière à pouvoir être déplacée dans le sens axial et pivotée, sont rigidement assemblés l'un avec l'autre et
qu'il est prévu une console (7) pouvant être reliée à la traverse frontale (8a) de la cabine du conducteur et sur laquelle est attaché un cadre de fixation (3) portant la colonne de direction (1) et étant pourvu de guides de coulisses (59/60, 61/62) pour ladite colonne de direction (1) et à laquelle est relié, associé au tableau de bord (4), un dispositif de stabilisation (18) qui présente des rails de guidage (19/20) disposés avec un espacement relativement grand l'un de l'autre et des éléments fonctionnels (35/36, 37, 38/39, 46) coopérant avec lesdits rails de guidage (19/20) et reliés au tableau de bord (4), de telle sorte que ledit dispositif de stabilisation (18) permette, d'une part, un réglage en hauteur et, d'autre part, un pivotement du sous-ensemble colonne de direction/tableau de bord autour d'un axe de rotation (56) monté mobile dans le cadre de fixation (3).

2. Véhicule selon la revendication 1,
caractérisé par le fait
que la console (7) présente un support transversal (23) situé, pour l'essentiel, dans le plan de fixation (73) et des bras d'appui (69, 70) perpendiculairement associés audit support transversal (23),
que sur ledit support transversal (23) sont formées des faces (21/22) servant à la fixation des rails de guidage (19/20),
que sur la console (7), sur le côté opposé auxdites faces (21/22) est formé au moins un rebord (30/31) pour la suspension de la console (7) sur la traverse (8a) du véhicule automobile et
que, entre les bras d'appui (69/70), est formé un canal de guidage (71) de telle sorte que le fond (72) dudit canal de guidage (71) est réalisé en un angle aigu par rapport au plan de fixation (73).

3. Véhicule selon la revendication 1,
caractérisé par le fait
que le dispositif de stabilisation (18) présente une barre de raccordement (37) traversant des coulisses (40/41) dans les rails de guidage (19/20),
que sur ladite barre de raccordement (37) sont fixées, à l'extérieur des rails de guidage (19/20), des roues dentées (35/36),
que des crémaillères (33/34) sont reliées aux rails de guidage (19/20) avec lesquelles engrènent lesdites roues dentées (35/36) et
que la barre de raccordement (37) est directement assemblée avec le tableau de bord (4), de telle sorte que, dans la position médiane (68) de l'angle de pivotement Â du sous-ensemble colonne de direction/tableau de bord, le plan dans lequel se trouvent, d'une part, ladite barre de raccordement (37) et, d'autre part, l'axe de rotation (56) est dressé perpendiculairement au plan dans lequel se trouvent les coulisses (40/41).

4. Véhicule selon la revendication 1,
caractérisé par le fait
qu'un élément de l'arbre de direction prévu entre le volant (2) et le mécanisme de direction du véhicule automobile et constitué de plusieurs éléments articulés les uns avec les autres est réalisé comme arbre télescopique (17) monté sur ressort.

5. Véhicule selon la revendication 1,
caractérisé par le fait
que, entre les rails de guidage (19/20), est prévu un élément de serrage (16) monté fou sur la barre de raccordement (37),
qu'audit élément de serrage (16) sont associées des douilles de serrage (42/43) disposées de façon concentrique à ladite barre de raccordement (37) et
que, comme liaison entre le tableau de bord (4) et les éléments fonctionnels (35/36, 37, 38/39) du dispositif de stabilisation (18) associés audit tableau de bord (4), il est prévu un support (46) fixé sur ledit tableau de bord (4), réalisé comme pont à paliers, qui est monté sur les douilles de serrage (42/43).
